# EUROPEAN PATENT APPLICATION

(11) **EP 3 591 602 A1**
(43) Date of publication of application: **08.01.2020**
(21) Application number: 18761343.5
(22) Date of filing: 27.02.2018
(51) Int. Cl.: G06Q 30/06

(54) **CLOTHES ORDER RECEPTION MANAGEMENT DEVICE, INFORMATION PROCESSING METHOD, PROGRAM, AND RECORDING MEDIUM**

(30) Priority: 28.02.2017 JP 2017036670
(71) Applicant: Spiber Inc., Yamagata 997-0052 (JP)
(72) Inventor: SEKIYAMA, Kazuhide, Tsuruoka-shi Yamagata 997-0052 (JP); UHIRA, Goshi, Tsuruoka-shi Yamagata 997-0052 (JP)
(74) Representative: Plougmann Vingtoft a/s
(86) International application number: PCT/JP2018/007080
(87) International publication number: WO 2018/159567

(57) **Abstract**

In a garment order reception management part 1, a garment information acquisition part 301 acquires garment information which specifies a garment selected by an orderer. A body shape information acquisition part 302 acquires body shape information of a wearer who wears the garment. An evaluation acquisition part 303 acquires, with respect to the garment manufactured on the basis of the garment information and the body shape information, an evaluation of size when the garment is worn. A body shape information modification part 304 modifies the body shape information on the basis of the evaluation.

## Description

### TECHNICAL FIELD

The present invention relates to a garment order reception management apparatus, an information processing method, a program, and a recording medium, in particular, to a technique for receiving an order for a garment online.

### BACKGROUND OF THE INVENTION

Conventionally, a technique that receives body measurements of a consumer and compares the consumer's usual size with the sizes determined by a garment's manufacturer in order to select the garment most likely to fit the consumer is disclosed.

### PRIOR ART

### PATENT DOCUMENT

Patent Document 1: United Sates Patent Publication No. 2006/0287877

### SUMMARY OF INVENTION

### PROBLEMS TO BE SOLVED BY THE INVENTION

According to the technique described above, consumers can increase the possibility of finding garments that fit their own body dimensions. However, there are wide variations in consumers' body dimensions and shape, and size preferences of garments may vary from wearer to wearer. For this reason, it is still difficult to accurately convey size information, including preferences, to a garment manufacturer at one time.

The present invention focuses on this point, and an object of the invention is to provide a technique for improving the accuracy of body shape information transmitted to the manufacturer by an orderer of a garment.

### MEANS FOR SOLVING THE PROBLEMS

A first aspect of the present invention is a program. This program causes a computer to implement: a garment information acquisition function that acquires garment information specifying a garment; a body shape information acquisition function that acquires body shape information of a wearer who wears the garment; an evaluation acquisition function that acquires, with respect to the garment manufactured on the basis of the garment information and the body shape information, an evaluation of size when the garment is worn; and a body shape information modification function that modifies the body shape information on the basis of the evaluation.

The evaluation acquisition function may acquire an evaluation by the wearer of a size relationship between body parts of the wearer and portions of the garment corresponding to the body parts.

The body shape information modification function may modify the body shape information to be smaller than an original value when the wearer evaluates the garment to be large in size, and modifies the body shape information to be larger than the original value when the wearer evaluates the garment to be small in size.

The program may cause the computer to implement: a display control function that displays, on a display part, a human model whose body shape is changed on the basis of the body shape information, wherein the display control function displays, on the display part, the human model based on the body shape information being modified by the body shape information modification function after the evaluation acquisition function acquires the evaluation.

The body shape information acquisition function may acquire information on height and weight of the wearer.

The body shape information acquisition function may further acquire information on bone structure of the wearer.

The body shape information acquisition function may further acquire physique information indicating a pattern of a physique of the wearer.

A second aspect of the present disclosure is a garment order reception management apparatus. This apparatus includes a garment information acquisition part that acquires garment information specifying a garment selected by an orderer; a body shape information acquisition part that acquires body shape information of a wearer who wears the garment; an evaluation acquisition part that acquires, with respect to the garment manufactured on the basis of the garment information and the body shape information, an evaluation of size when the garment is worn; and a body shape information modification part that modifies the body shape information on the basis of the evaluation.

A third aspect of the present invention is an information processing method performed by a processor. This method includes the steps of: acquiring garment information specifying a garment selected by an orderer; acquiring body shape information of a wearer who wears the garment; acquiring, with respect to the garment manufactured on the basis of the garment information and the body shape information, an evaluation of size when the garment is worn; and modifying the body shape information on the basis of the evaluation.

A fourth embodiment of the present invention relates to a computer-readable recording medium. This recording medium stores any of the above programs.

It should be noted that any combination of the above-described constituent elements, and an aspect obtained by converting the expression of the present invention among methods, devices, systems, computer programs, data structures, recording media, and the like are also effective as an aspect of the present invention.

### EFFECT OF THE INVENTION

According to the present invention, it is possible to improve an accuracy of body shape information transmitted to manufacturers by an orderer of a garment.

### BRIEF DESCRIPTION OF THE DRAWINGS

FIG. 1 is a schematic diagram showing an outline of a garment made-to-order system according to the embodiment.
FIG. 2 is a schematic diagram showing a functional configuration of a garment order reception management apparatus according to the embodiment.
FIG. 3 is a diagram showing an example of a garment ordering screen displayed on a communication terminal according to the embodiment.
FIG. 4 is a diagram showing an example of a body shape information input screen displayed on the communication terminal according to the embodiment.
FIG. 5 is a diagram showing an example of a physique information selection screen displayed on the communication terminal according to the embodiment.
FIG. 6 is a diagram showing an example of a purchased item selection screen displayed on the communication terminal according to the embodiment.
FIGS. 7A and 7B are each a diagram showing an example of an evaluation input screen displayed on the communication terminal according to the embodiment.
FIG. 8 is a diagram showing an example of an evaluation completion screen displayed on the communication terminal according to the embodiment.
FIG. 9 is a flowchart illustrating an information process executed by the garment order reception management apparatus according to the embodiment.

### DETAILED DESCRIPTION OF THE INVENTION

### <Outline of the Embodiment>

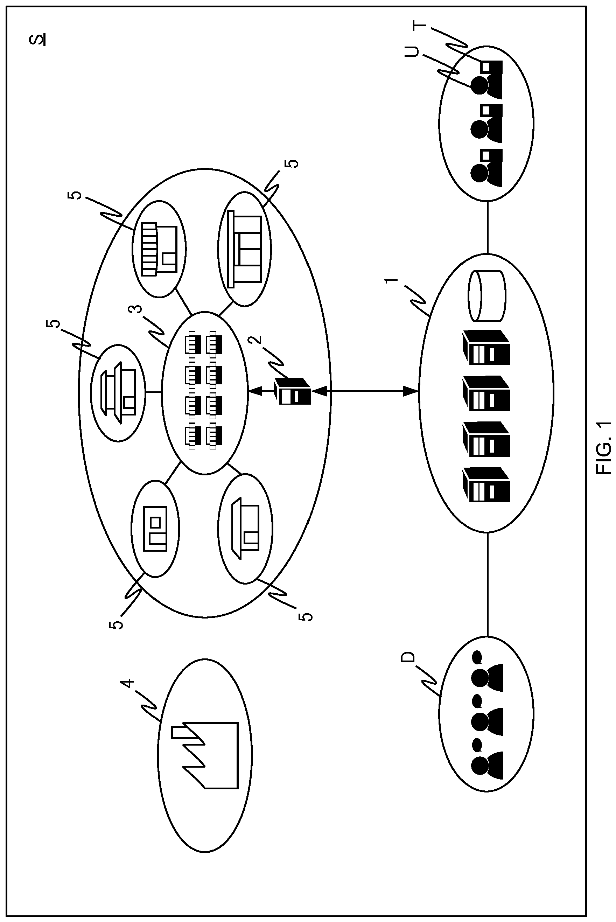

An outline of the embodiment will be explained while referring to FIG. 1. FIG. 1 is a schematic diagram showing an outline of a garment made-to-order system S according to the embodiment. The garment made-to-order system S includes a garment order reception management apparatus 1, a seamless knitting machine control apparatus 2, a seamless knitting machine 3, a plant 4, and a store 5.

The garment order reception management apparatus 1 communicates with each communication terminal T of a plurality of users U via a network such as the Internet, where the users U are orderers. The garment order reception management apparatus 1 is also connected in a communicable manner to an information terminal of a designer D of garments that the garment order reception management apparatus 1 handles. The garment order reception management apparatus 1 is connected also to the seamless knitting machine control apparatus 2 in a communicable manner.

The garment order reception management apparatus 1 provides the communication terminal T of the user U with a function for creating custom-made garments. The garment order reception management apparatus 1 acquires, from the communication terminal T of the user U, garment information for specifying a garment to be purchased by the user U, and body shape information regarding the body shape of the wearer of the garment. Here, the wearer and the user U may be the same, or if the user U places an order for the garment with an intention to let someone other than himself/herself wear it, such as a gift to his/her friend or family member, the wearer and the user U may be different.

The seamless knitting machine control apparatus 2 can communicate with one or more seamless knitting machines 3 and controls an operation of each seamless knitting machine 3. The seamless knitting machine control apparatus 2 acquires production information for manufacturing the garment which the user U ordered from the garment order reception management apparatus 1. On the basis of the acquired production information of the garment, the seamless knitting machine control apparatus 2 selects a seamless knitting machine 3 to be used for manufacturing that garment. Next, the seamless knitting machine control apparatus 2 transmits the production information to the selected seamless knitting machine 3 and makes the seamless knitting machine 3 manufacture the garment.

The seamless knitting machine 3 is an apparatus that knits the garments on the basis of the production information received from the seamless knitting machine control apparatus 2 and uses, as raw materials, fibers and the like that contain a structural protein and are made in the plant 4. The seamless knitting machine 3 can knit a garment three-dimensionally in one entire piece. When the seamless knitting machine 3 is used for manufacturing a garment, the process of cutting out each part from fabrics and sewing them together (cut-and-sew process) is basically unnecessary. Because no material is discarded due to cutting, the garments that are manufactured by the seamless knitting machine 3 create little waste.

Also, in FIG. 1, the store 5 is a store that provides the garment manufactured by the seamless knitting machine 3 to the user U. A specific example of the store 5 is a laundromat, a convenience store, or various kinds of shopping centers. Another example of the store 5 is a distribution center of a shipping carrier or the like. In the former case, the user U receives the garment over the counter at the store 5. In the latter case, the user U can have the ordered garment delivered to a designated place such as the user U's home.

Generally, garments of the same size often give a different sense of size when manufacturers differ. Furthermore, even for the same manufacturer, there may be products that are produced somewhat tightly and products produced somewhat loosely across that manufacture's product lineup. Therefore, even if an orderer of a garment managed to convey the body shape information of the wearer of a garment in detail, it is difficult to match the size without having the wearer of the garment wear the garment once.

On the other hand, if the wearer has an opportunity to wear a garment even once, the wearer can evaluate the length, collar, overall fit, and the like using the garment he/she is wearing as a "scale." Because the manufacturer knows the size of the manufactured garment accurately, if the manufacturer can acquire the evaluation of the wearer, the size of the garment can be accurately modified.

The garment order reception management apparatus 1 according to the embodiment acquires the evaluation of the size when the wearer actually wears the garment, and modifies the body shape information of the wearer on the basis of the evaluation. In other words, the garment order reception management apparatus 1 acquires feedback from the wearer on the size of the manufactured garment at least once, and thereby improves the accuracy of the body shape information. This allows the garment order reception management apparatus 1 to manufacture the garment that matches the body shape and preferences of a wearer for the wearer from whom the garment order reception management apparatus 1 has once received evaluation feedback. The aforementioned evaluation of the size may be performed by the wearer himself/herself or by a third party (for example, a parent, a parental guardian, or the like if the wearer is a child) other than the wearer.

Hereinafter, the garment order reception management apparatus 1 included in the garment made-to-order system S will be described in more detail.

### <Functional configuration of the garment order reception management apparatus 1>

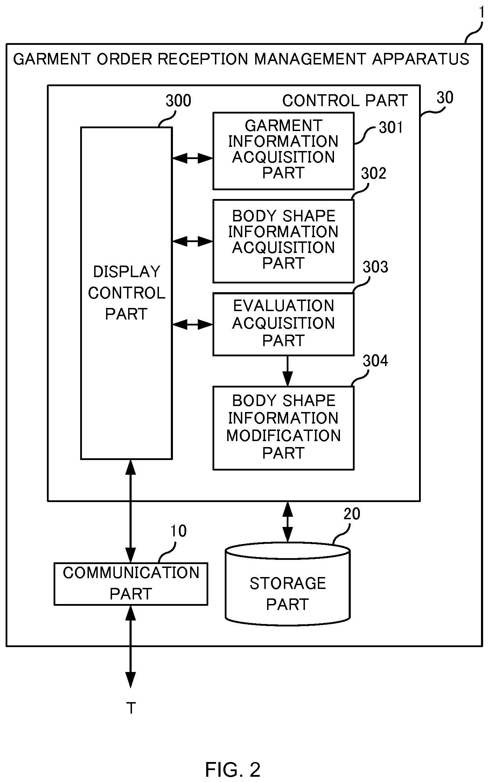

FIG. 2 is a schematic diagram showing an outline of a functional configuration of the garment order reception management apparatus 1 according to the embodiment. The garment order reception management apparatus 1 according to the embodiment is realized by calculation resources of cloud computing such as a cloud server. The garment order reception management apparatus 1 includes a communication part 10, a storage part 20, and a control part 30. From the perspective of the communication terminal T of the user U, the garment order reception management apparatus 1 functions as a webserver or a server equivalent thereto that responds to a request of the communication terminal T.

FIG. 2 shows a functional configuration for achieving a process performed between the garment order reception management apparatus 1 and the communication terminal T according to the embodiment, and other configurations such as a configuration for achieving a process performed between the seamless knitting machine control apparatus 2, for example, are omitted. In FIG. 2, each element mentioned as a functional block performing various procedures may include, in terms of hardware, a central processing unit (CPU), a main memory, and other large scale integration (LSI). Further, in terms of software, various procedures are realized with programs loaded in the main memory or the like. Accordingly, it is understood by those skilled in the art that each functional block may be realized in various forms by hardware only, software only, or a combination thereof, and is not limited to any of them.

The communication part 10 is a communication interface that allows the garment order reception management apparatus 1 to communicate with the communication terminal T of the user U. The communication part 10 is realized by known communication modules, for example, a Wi-Fi (registered trademark) module, a local area network (LAN) module, and the like.

The storage part 20 is a mass-storage device such as a hard disk drive (HDD) or a solid state drive (SSD) that stores (i) a read only memory (ROM) which stores a basic input output system (BIOS) for a computer, and the like that realize the garment order reception management apparatus 1, (ii) a random access memory (RAM) which is a work area of the garment order reception management apparatus 1, (iii) an operating system (OS) and application programs, and (iv) various types of information to be referenced when executing the application programs.

The control part 30 includes a processor such as a central processing unit (CPU) or a graphic processing unit (GPU) of the garment order reception management apparatus 1, and functions as a display control part 300, a garment information acquisition part 301, a body shape information acquisition part 302, an evaluation acquisition part 303, and a body shape information modification part 304 by executing programs stored in the storage part 20.

Hereinafter, the functional configuration of the garment order reception management apparatus 1 according to the embodiment and a graphical user interface (GUI) to be displayed on a display part of the communication terminal T will be described while referring to FIGS. 2 to 8, as appropriate.

The display control part 300 controls the GUI to be displayed on the communication terminal T of the user U. More specifically, the display control part 300 provides the communication terminal T with the GUI for realizing a function of each unit of the control part 30 via the communication part 10. Hereinafter, each part of the garment order reception management apparatus 1 according to the embodiment displays the GUI on the display part of the communication terminal T via the display control part 300 and the communication part 10, and the descriptions in this regard may be omitted.

The garment information acquisition part 301 acquires garment information to specify a garment. More specifically, the garment information acquisition part 301 provides the GUI for selecting a garment to the communication terminal T of the user U in response to a request from the communication terminal T.

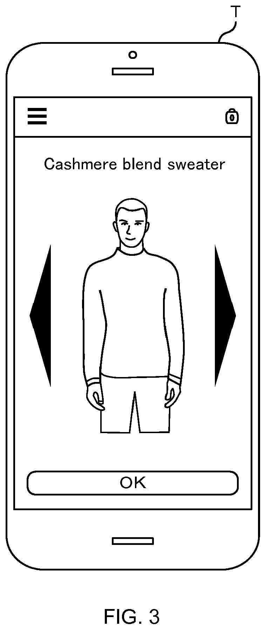

FIG. 3 is a diagram showing an example of a garment ordering screen displayed on the communication terminal T according to the embodiment. The example of the GUI shown in FIG. 3 shows a case where the user U selects a "cashmere blend sweater" as a garment to be purchased. The user U can select another item by swiping the GUI.

The body shape information acquisition part 302 acquires the body shape information of a wearer who wears the garment. Therefore, the body shape information acquisition part 302 provides the GUI for inputting the body shape information of the wearer to the communication terminal T of the user U when the user U completes the selection of the garment on the garment ordering screen shown in FIG. 3.

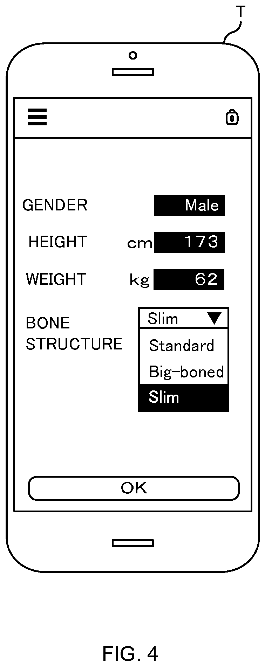

FIG. 4 is a diagram showing an example of a body shape information input screen displayed on the communication terminal T according to the embodiment. On the body shape information input screen, the user U can input information regarding the body shape of the wearer of the garment.

In the example shown in FIG. 4, the user U inputs, as the body shape information of the wearer of the garment, "Male" in gender, "173cm" in height, "62kg" in weight, and "slim" in bone structure. In this instance, the body shape information acquisition part 302 acquires information on the gender, height, weight, and bone structure of the wearer as the body shape information.

Here, the height and weight are basic information for determining the body shape of the wearer of the garment. Also, since men and women generally have different body shapes, the gender may also be useful information for determining the body shape of the wearer. In addition, the "bone structure" of the wearer is useful information for estimating a contour of the wearer. Furthermore, since the proportion of "weight of bone" in the weight of the wearer is large, the "information regarding the bone structure" indicating the weight of bone serves as a clue when estimating how the wearer is physically built.

The body shape information acquisition part 302 may further acquire "physique information" indicating a pattern of physique of the wearer as the body shape information of the wearer. Here, the "pattern of the physique" is information obtained by classifying how wearers are physically built, and is information classified into, for example, "lean type," "muscular type," and "obese type." To realize this, the body shape information acquisition part 302 provides the GUI for selecting the "physique information" of a wearer to the communication terminal T of the user U.

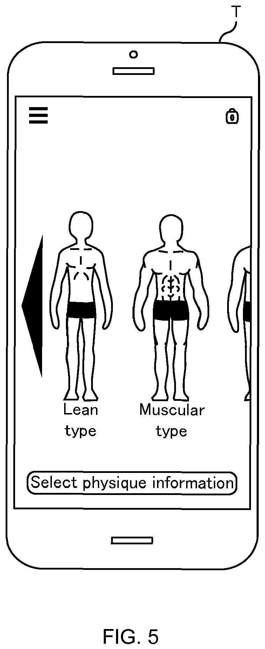

FIG. 5 is a diagram showing an example of a physique information selection screen displayed on the communication terminal T according to the embodiment. As shown in FIG. 5, the body shape information acquisition part 302 displays the patterns of physiques together with illustrations corresponding to the respective types on the communication terminal T. In the example shown in FIG. 5, the body shape information acquisition part 302 displays an illustration showing the physique of the "lean type" on the communication terminal T together with the character strings "lean type." Similarly, the body shape information acquisition part 302 displays an illustration showing the physique of "muscular" together with the character strings "muscular type" on the communication terminal T. The user U can also display an "obese" physique pattern on the communication terminal T by swiping the screen of the communication terminal T. This allows the user U to intuitively select the physique information while viewing the illustrations.

The garment order reception management apparatus 1 according to the embodiment is a part of the garment made-to-order system S and may receive a request for customization from the user U regarding the garment selected by the user U. For example, when the user U selects a "cashmere blend sweater" as the type of garment, the user U may adjust the sleeve length, the shape of a neckline, materials of the sweater, and the like of the selected sweater. Therefore, as the above described garment information, changeable parameters relating to the design, the material, and the manufacturing process of the garment are set for each of the garments handled by the garment order reception management apparatus 1 according to the embodiment.

Here, the "parameter relating to the design" is a parameter representing the outline of the garment selected by the user U. Roughly speaking, the parameter relating to the design includes a parameter representing the size of the garment and a parameter representing the shape of the garment. The parameter representing the shape of the garment includes (i) a parameter representing the type of each part of the garment (for example, types of the shape of a neckline would be a round-neck, a henry-neck, or the like), (ii) a parameter representing the length and the width of each part of the garment, and (iii) a parameter representing the size and the like of mesh when the garment is a knit.

Further, a "parameter relating to materials" is a parameter for specifying the materials of the garment. If the garment is composed of a plurality of materials instead of a single material, the blending ratio is also included in the parameter relating to materials. A "parameter relating to the manufacturing process" is design information for manufacturing the garment, and includes at least one of an index indicating the time required to manufacture the garment and an index indicating the complexity of the manufacturing process.
It should be noted that a default parameter database (not shown) associating each of the garments with its default parameter is stored in the storage part 20 in advance.

Though not shown, the garment order reception management apparatus 1 modifies the parameter relating to the manufacturing process so that a garment that suits the body shape information acquired by the body shape information acquisition part 302 is manufactured, and transmits the modified parameters to the seamless knitting machine control apparatus 2. The seamless knitting machine 3 manufactures the garment under the control of the seamless knitting machine control apparatus 2 which receives the parameter relating to the manufacturing process. The garment produced by the seamless knitting machine 3 is shipped to the user U or delivered to the user U by methods such as a method in which the user U visits a receiving destination to receive the garment.

The evaluation acquisition part 303 acquires an evaluation of the size for a garment manufactured by the seamless knitting machine 3 on the basis of the garment information and the body shape information, the evaluation is made by a wearer when he/she wears the garment. Hereinafter, the GUI provided by the garment order reception management apparatus 1 to the communication terminal T in order to acquire the evaluation of the size from the user U will be described.

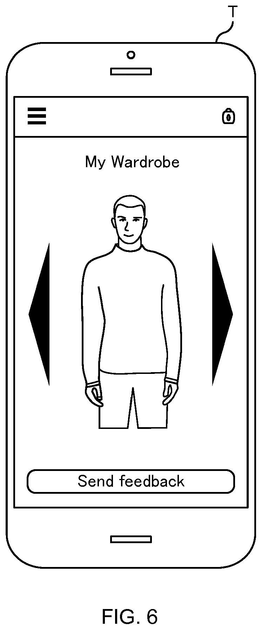

FIG. 6 is a diagram showing an example of a purchased item selection screen displayed on the communication terminal T according to the embodiment. The display control part 300 provides a user-exclusive purchased item selection screen for each user U to the communication terminal T of the user U. On the purchased item selection screen, the user U can select images of garments that were ordered via and delivered from the garment made-to-order system S in the past.

In the example shown in FIG. 6, one image of the garments which the user U ordered and had delivered to him/her is displayed on the display part of the communication terminal T. In the example of the purchased item selection screen shown in FIG. 6, the user U can display an image of another garment by swiping the screen. This allows the user U to intuitively select the purchased garment.

Although not shown, the display control part 300 may display, on the communication terminal T of the user U, a list of thumbnail images of the garments which the user U ordered via and had delivered from the garment made-to-order system S in the past. When there are a large number of garments purchased by the user U, the user U can select a garment from the displayed list of the thumbnail images. Therefore, the garment order reception management apparatus 1 can save the user U from the trouble of selecting a garment.

When the user U selects the garment and taps the "Send feedback" icon on the purchased item selection screen shown in FIG. 6, the display control part 300 causes the communication terminal T to change the display screen to the evaluation input screen.

On the evaluation input screen, the user U can perform an evaluation of the size of the purchased garments. The evaluation acquisition part 303 acquires the wearer's evaluation of a size relationship between body parts of the wearer and portions of the garment corresponding to the body parts. Specifically, for example, as an evaluation of the size of the purchased sweaters, the evaluation acquisition part 303 evaluates "sleeve length," "body length," "neckline," "shoulder width," "waist," and "cuffs."

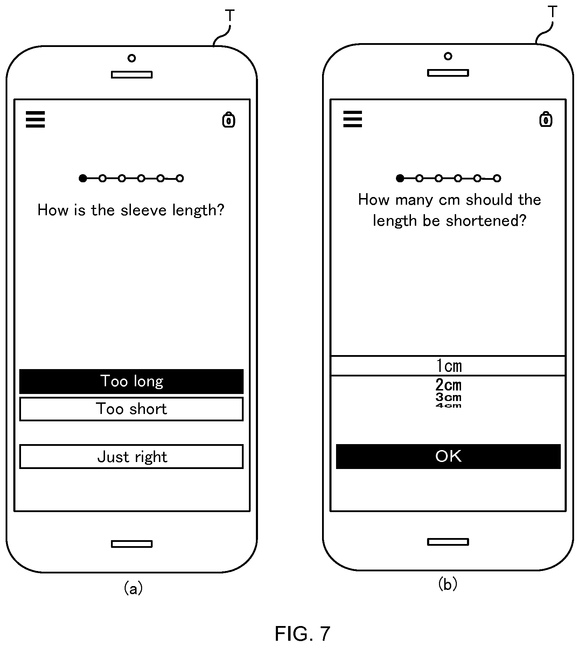

FIGS. 7A and 7B are each a diagram showing an example of the evaluation input screen displayed on the communication terminal T according to the embodiment. Specifically, FIG. 7A shows an example of a screen for implementing a qualitative evaluation for the length of the sleeves, and shows an example in which the user U selects "Too long" as the evaluation for the length of the sleeves. Also, FIG. 7B shows an example of a screen for implementing a quantitative evaluation for a specific length. On the screen for implementing the quantitative evaluation, the user U can specifically input an alteration amount of cuff length.

In FIG. 7B, when the user U taps the "OK" icon, the evaluation acquisition part 303 moves the screen to be displayed on the communication terminal T to an evaluation screen (not shown) for the body length. In this manner, the evaluation acquisition part 303 sequentially displays evaluation screens corresponding to the respective body parts of the wearer on the communication terminal T. Therefore, the user U can complete the evaluation of the size of the garment by performing the evaluations according to the evaluation screens that are sequentially displayed on the communication terminal T.

Although not shown, the evaluation acquisition part 303 may acquire whether the fit was similar to the fit of the garment worn by a model and shown in an image which the user U checked and perceived on the display screen of the communication terminal T at the time of ordering the garment. Here, "the fit" means the sense of tightness or looseness when a garment is worn. By acquiring feedback regarding a difference between the fit on a model perceived on the display screen and the fit when the wearer actually wore the garment, the evaluation acquisition part 303 can acquire more multifaceted evaluations from the wearer.

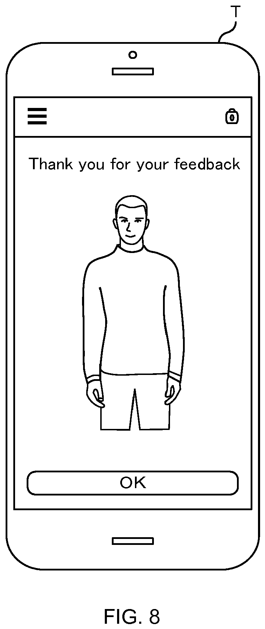

FIG. 8 is a diagram showing an example of an evaluation completion screen displayed on the communication terminal T according to the embodiment. When the user U completes all evaluations relevant to sizes, the display control part 300 displays the evaluation completion screen on the communication terminal T. The display control part 300 displays an image of the garment which was evaluated for sizes by the user U on the evaluation completion screen.

With reference to FIG. 2 again, the body shape information modification part 304 modifies the body shape information of the wearer of the garment on the basis of the evaluation of the size of the garment acquired by the evaluation acquisition part 303. Specifically, when the user U evaluates the size of the garment to be large, the body shape information modification part 304 modifies the body shape information of the wearer of the garment so as to be smaller than the original value.

Conversely, if the user U evaluates the size of the garment to be small, the body shape information of the wearer of the garment is modified to be larger than the original value. The body shape information modification part 304 can improve the accuracy of the body shape information of the wearer by reflecting the evaluation results corresponding to the respective body parts acquired by the evaluation acquisition part 303 in the body shape information.

Here, the evaluation completion screen shown in FIG. 8 shows an example of the evaluation completion screen when the user U evaluates the length of the sleeves to be "Too long," that is, that the length of the sleeves should be shortened. Therefore, when compared to the sleeve length of the garment displayed on the purchased item selection screen shown in FIG. 6, the sleeve length of the garment on the evaluation completion screen shown in FIG. 8 is shortened.

In this manner, the display control part 300 causes the display part of the communication terminal T to display a human model whose body shape is changed on the basis of the body shape information. After the evaluation acquisition part 303 acquires the evaluations, the display control part 300 displays, on the display part, the human model based on the body shape information modified by the body shape information modification part 304. This enables the user U to intuitively know the result of the evaluation of the size.

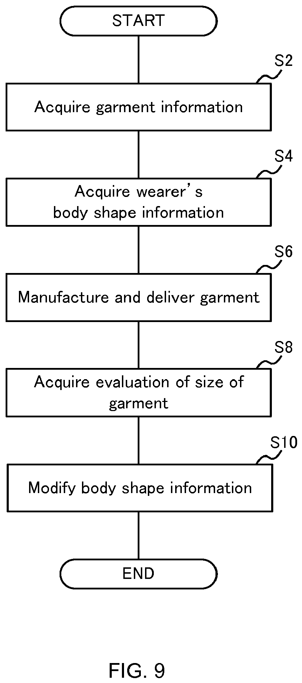

FIG. 9 is a flowchart illustrating an information process executed by the garment order reception management apparatus 1 according to the embodiment. The process in the flowchart starts upon, for example, activation of the garment order reception management apparatus 1.

The garment information acquisition part 301 acquires garment information specifying a garment ordered by the user U (S2). The body shape information acquisition part 302 acquires body shape information of the wearer wearing the garment (S4). The seamless knitting machine 3 manufactures the garment on the basis of the garment information and the body shape information, and delivers the manufactured garment to the user U (S6).

The acquisition part 303 acquires an evaluation of size when the garment is worn, the evaluation being performed by the wearer wearing the garment delivered to the user U (S8). The body shape information modification part 304 modifies the body shape information of the wearer on the basis of the evaluation performed by the wearer (S10). When the body shape information modification part 304 modifies the body shape information of the wearer, the process of this flowchart ends.

### <Effects of the garment order reception management apparatus 1>

As described above, according to the garment order reception management apparatus 1 of the embodiment, it is possible to improve the accuracy of the body shape information transmitted to the manufacturer by the garment orderer. In particular, because the garment order reception management apparatus 1 according to the embodiment modifies the body shape information by acquiring the evaluation by the wearer who actually wore the garment, and therefore the accuracy of the modification can be remarkably improved. In addition, preferences regarding the size of the wearer can also be reflected in the body shape information.

The present invention has been described above on the basis of the exemplary embodiments. The technical scope of the present invention is not limited to the scope explained in the above embodiments, and it is obvious to those skilled in the art that various changes and modifications within the scope of the invention may be made. An aspect to which such changes and modifications are added can be included in the technical scope of the present invention is obvious from the description of the claims. Hereinafter, such a modified example will be described.

### <Variation Example 1 >

Cases where the user U inputs the body shape information of the wearer as the character information were explained above. Alternatively, or in addition, the display control part 300 may allow the user U to input the body shape information by selecting an illustration.

Specifically, the display control part 300 displays, on the display part of the communication terminal T in a manner selectable by the user U, a plurality of different human models that each have different body shape information set thereto. The body shape information acquisition part 302 acquires the body shape information set for the human model selected by the user U as the body shape information of the wearer. By doing this, the garment order reception management apparatus 1 can save the user U from the trouble of inputting the body shape information.

### <Variation Example 2>

In the above description, when the user U places an order for a garment in the garment made-to-order system S for the first time, the accuracy of the body shape information of the wearer is not necessarily guaranteed. In this sense, the body shape information transmitted to the garment made-to-order system S when the user U places an order for the first time may serve as a basis for a subsequent order. For this reason, when placing an order for a garment in the garment made-to-order system S for the first time, the user U may have second thoughts about placing an order because there is a risk that a garment that does not fit sizewise may be manufactured. Therefore, the manufacturer of the garment managing the garment made-to-order system S may lower the cost of the garment or issue a discount token and the like applicable to the second and subsequent orders to the user U who orders a garment for the first time. The discount token may be realized in an electronic manner, or may be printed on a paper medium and distributed to the user U.

To realize the above, the garment order reception management apparatus 1 may include a user information management part (not shown) for managing information of the user U. The user information management part accumulates and manages (i) a user identifier uniquely assigned to each user U, (ii) garment information for specifying a garment ordered by a user U in the past, and (iii) body shape information in a history management database (not shown). By referencing the history management database, the user information management part can specify whether or not the user U has ordered a garment for the first time. The user information management part provides the garment at a discount price to the user U who has ordered a garment for the first time.

The history management database also stores information of the electronic discount token in association with the user identifier of the user U. When the user U who is associated with the discount token orders a garment, the user information management part may display, on the display part of the communication terminal T in a selectable manner, that the discount token is present on the garment order screen. This allows the user U to purchase garment at the discounted price.

It should be noted that the issuance of the above-mentioned discount or discount token of the garment may be performed on the basis of an evaluation of the size when the wearer wears the garment, instead of when the user U orders the garment for the first time. For example, the discount token may be issued when the evaluation of the size is equal to or less than a predetermined value, or when a divergence between the body shape information assumed on the basis of the garment and the body shape information of the wearer is equal to or more than a predetermined value. Further, a percentage off or a discount rate may be changed in accordance with the degree of evaluation or divergence.

In this manner, the garment made-to-order system S can reduce the sense of reluctance of the user U to order a garment while the accuracy of the body shape information is not necessarily guaranteed when ordering garment for the first time.

It should be noted that an administrator of the garment made-to-order system S may issue the discount token on the assumption that he/she will collect the first product ordered by the user U free of charge. The administrator of the garment made-to-order system S can reuse the collected garment for manufacturing other garments by converting it into raw materials. As for the user U, even if the size of the first product did not fit, the accuracy of the body shape information can be improved, therefore the user U can make the size of the garment to be ordered thereafter conform to his/her desired size.

### < Variation Example 3 >

Cases where the apparatus that manufactures the garment in the garment made-to-order system S is the seamless knitting machine 3 were explained above.
However, the apparatus that manufactures the garment in the garment made-to-order system S is not limited to the seamless knitting machine 3.
Even in cases where garments are manufactured in an automated factory and the like adopting the process of cutting out each part from fabrics and sewing them together (cut-and-sew process), the GUI provided to the communication terminal T by the garment order reception management apparatus 1 according to the embodiment may be applied.

### [Description of the reference numerals]

- 1: Garment order reception management apparatus
- 2: Seamless knitting machine control apparatus
- 3: Seamless knitting machine
- 4: Plant
- 5: Store
- 10: Communication part
- 20: Storage part
- 30: Control part
- 300: Display control part
- 301: Garment information acquisition part
- 302: Body shape information acquisition part
- 303: Evaluation acquisition part
- 304: Body shape information modification part
- S: Garment made-to-order system
- T: Communication terminal

## Claims

1. A program that causes a computer to implement:
a garment information acquisition function that acquires garment information specifying a garment;
a body shape information acquisition function that acquires body shape information of a wearer who wears the garment;
an evaluation acquisition function that acquires, with respect to the garment manufactured on the basis of the garment information and the body shape information, an evaluation of size when the garment is worn; and
a body shape information modification function that modifies the body shape information on the basis of the evaluation.

2. The program according to claim 1, wherein
the evaluation acquisition function acquires an evaluation by the wearer of a size relationship between body parts of the wearer and portions of the garment corresponding to the body parts.

3. The program according to claim 2, wherein
the body shape information modification function modifies the body shape information to be smaller than an original value when the wearer evaluates the garment to be large in size, and modifies the body shape information to be larger than the original value when the wearer evaluates the garment to be small in size.

4. The program according to any one of claims 1 to 3, that further causes the computer to implement:
a display control function that displays, on a display part, a human model whose body shape is changed on the basis of the body shape information, wherein
the display control function displays, on the display part, the human model based on the body shape information being modified by the body shape information modification function after the evaluation acquisition function acquires the evaluation.

5. The program according to any one of claims 1 to 4, wherein
the body shape information acquisition function acquires information on height and weight of the wearer.

6. The program according to claim 5, wherein
the body shape information acquisition function further acquires information on bone structure of the wearer.

7. The program according to any one of claims 1 to 6, wherein
the body shape information acquisition function further acquires physique information indicating a pattern of a physique of the wearer.

8. A garment order reception management apparatus comprising:
a garment information acquisition part that acquires garment information specifying a garment selected by an orderer;
a body shape information acquisition part that acquires body shape information of a wearer who wears the garment;
an evaluation acquisition part that acquires, with respect to the garment manufactured on the basis of the garment information and the body shape information, an evaluation of size when the garment is worn; and
a body shape information modification part that modifies the body shape information on the basis of the evaluation.

9. An information processing method performed by a processor comprising the steps of:
acquiring garment information specifying a garment selected by an orderer;
acquiring body shape information of a wearer who wears the garment;
acquiring, with respect to the garment manufactured on the basis of the garment information and the body shape information, an evaluation of size when the garment is worn; and
modifying the body shape information on the basis of the evaluation.

10. A computer-readable recording medium storing the program according to any one of claims 1 to 7.
